# EUROPEAN PATENT SPECIFICATION

(11) **EP 2 076 376 B1**
(45) Date of publication and mention of the grant of the patent: **05.01.2011**
(21) Application number: 06806229.8
(22) Date of filing: 12.10.2006
(51) Int. Cl.: B29D 30/10

(54) **PRODUCING PROCESS OF A PNEUMATIC TYRE AND RELEVANT BUILDING LINE AND ASSEMBLING APPARATUS**
VERFAHREN ZUR HERSTELLUNG EINES LUFTREIFENS UND ENTSPRECHENDE AUFBAULINIE UND MONTAGEVORRICHTUNG
PROCÉDÉ DE FABRICATION D'UN BANDAGE PNEUMATIQUE, D'UNE CHAÎNE DE FABRICATION PERTINENTE ET D'UN APPAREIL D'ASSEMBLAGE

(43) Date of publication of application: 08.07.2009
(73) Proprietor: Pirelli Tyre S.p.A., 20126 Milano (IT)
(72) Inventor: MARCHINI, Maurizio, 20126 Milano (IT); MARIANI, Fiorenzo, 20126 Milano (IT); MISANI, Pierangelo, 20126 Milano (IT)
(74) Representative: Bottero, Claudio
(86) International application number: PCT/EP2006/009872
(87) International publication number: WO 2008/043382

(56) References cited:
- EP-A- 1 541 325
- WO-A-01/89818
- WO-A-02/096630
- WO-A1-03/062113
- US-A- 1 818 955

## Description

### Background of the invention

The present invention relates to a producing process of a pneumatic tyre and to the relevant building line and assembling apparatus.

In particular, the present invention relates to a process for producing a pneumatic tyre, to the relevant building line and to an assembling apparatus of a working station of the building line for assembling a carcass structure.

### Related art

Modem tyre manufacturing plants comprise a building line, wherein the different components of the tyre are made and/or assembled to form a green tyre, and a molding and vulcanization line wherein the tyre structure is defined and the tyre is completed.

A tyre generally comprises a toroidally ring-shaped carcass including one or more carcass plies, strengthened with reinforcing cords, lying in substantially radial planes, (a radial plane contains the rotation axis of the tyre). Each carcass ply has its ends integrally associated with at least one metal annular anchoring structure, usually known as bead core, constituting the reinforcing at the beads, i.e. at the radially internal ends of the tyre, the function of which is to enable assembling of the tyre with a corresponding mounting rim. Each of said anchoring structures is usually made up of a substantially circumferential annular insert onto which at least one filling insert is applied, at a radially external position thereof. Placed crown wise to said carcass structure is a band of elastomer material, called tread band, in which, at the end of the vulcanization and molding steps, a raised pattern is formed for ground contact. A reinforcing structure usually known as belt structure is placed between the carcass and the tread band. In the case of car tyres, this structure usually comprises at least two radially superposed strips of rubberised fabric provided with reinforcing cords, generally of metal material, positioned parallel to each other in each strip and in a crossed relationship with the cords of the adjacent strip preferably symmetrically arranged with respect to the equatorial plane of the tyre. Preferably said belt structure further comprises at a radially external position thereof, at least on the ends of the underlying strips, also a third layer of textile or metallic cords, circumferentially disposed (at zero degrees).

Finally, in tyres of the tubeless type, i.e. devoid of an air tube, a radially internal layer, called liner, is present which has imperviousness features to ensure the air-tightness of the tyre.

To the aims of the present description as well as in the following claims, by the term "elastomer material" it is intended a composition comprising at least one elastomer polymer and at least one reinforcing filler. Preferably this composition further comprises additives such as cross-linking and/or plasticizing agents. By virtue of the cross-linking agents, this material can be cross-linked through heating so as to form the final manufactured article.

Moreover, in the present description and in the following claims, by the term "carcass structure" it is intended a structure comprising at least one carcass ply and one annular insert.

According to recently developed tyre manufacturing processes, tyres are produced starting from a limited number of elementary semifinished products fed onto a toroidal support whose outer profile coincides with that of the radially internal surface of the tyre that is wished to be produced. Said toroidal support is moved, preferably by means of a robotized system, among a plurality of working stations in each of which, through automated sequences, a particular building step of the tyre is carried out.

WO 03/062113 discloses a system for the continuous supply of a structural component of a tyre to a processing unit for the deposition of said structural component, comprising a machine for the production of said structural component and a dynamic storage unit for said structural component, placed between said machine and said processing unit.

WO 02/096630 discloses a system for producing models of tyres which are different from each other, comprising: a building unit comprising a plurality of operating stations, each designated to assemble at least one corresponding structural component on at least one model of tyre being produced; a vulcanizing unit; a unit for producing a plurality of mixtures, comprising at least one extruder unit, which continuously supplies at least one of the said operating stations with at least one mixture suitable for making the said at least one structural component.

WO 01/89818 discloses a plant for producing tyres of different types simultaneously, comprising a plurality of operating units operating in succession, comprising a central process unit capable of causing the sequential execution of a plurality of operating steps at work stations, each of which comprises at least one of the said operating units, according to one or more predetermined sequences of type of tyres.

EP 1 541 325 discloses a module for manufacturing a cured tyre from a plurality of tire components, the module comprising a plurality of components appliers located at spaced locations along a predetermined path and a mobile tyre building trolley for movement along the predetermined path and two detachable tyre building drums for mounting on the movable trolley.

International Patent Application WO 01/39963, in the name of the same Applicant, discloses a plant for producing different types of tyre comprising a complex manufacturing unit having a plurality of working stations, each designed to assemble at least one corresponding structural component on at least one type of tyre being processed, a complex vulcanizing unit and devices for the functional transfer of the tyre being processed, operating between the working stations.

The International Patent Application WO 01/32409, in the name of the same Applicant, discloses a manufacturing line provided with working stations, each arranged to make and assemble at least one structural component of the tyre being processed. Said structural components are assembled on a toroidal support provided with bar codes through which the model of the tyre to be manufactured is identified and consequent adaptation of the working stations to the particular tyre working is carried out. Robotized arms sequentially transfer the individual tyres between the different working stations and to a curing line.

The development of new technologies and the necessity of high performance tyres, have oriented the production towards more complex products such as tyres with multiple carcass plies and corresponding multiple reinforcing structures.

An example of said tyres is described in WO 00/26014, in the name of the same Applicant, which discloses a tyre carcass structure comprising two carcass plies each made up of a first and a second series of strip-like sections laid down on the toroidal support in alternate sequence. Also arranged in each tyre bead is a pair of annular reinforcing structures inserted between the end flaps of the sections belonging to the first and second series respectively and forming one of the carcass plies.

In order to obtain multiple carcass ply tyres, the known production processes, among which the processes disclosed in the above mentioned patent applications, comprise repeated transferrals of the processed tyre between a first working station intended for laying down the strip-like elements forming the carcass ply and a second working station intended for laying down the annular inserts forming the tyre beads.

### Summary of the invention

These repeated transfers of the toroidal support moving forward and backward between the same working stations are notably time-consuming and decrease the productive capacity of the tyre production plant.

Moreover, the processes above described do not allow a well-managed utilization of the different working stations and devices of the tyre building line.

The Applicant has perceived that by repetitively transferring the toroidal support between the bead working station and the ply working station, the handling time of the toroidal support is badly managed since it moves along a forward-backward pathway that results long and time-consuming.

The Applicant has therefore noted that by decreasing the number of transferring steps of the toroidal support in the tyre building process and, in particular, by moving the toroidal support sequentially from one working station of the building line to the following, along a unidirectional pathway, it is possible to achieve a simpler process which allows to increase the productive capacity of the tyre manufacturing plant while maintaining constant the quality of the final products.

The Applicant has also noted that by integrating a device for assembling annular inserts and a device for assembling carcass plies in a single apparatus it is possible to avoid useless transferring operation, decreasing in this way the tyre manufacturing time and thus the production cost per piece.

The Applicant has further found that by providing the known tyre manufacturing plants with a tyre building line comprising one or more apparatuses adapted for assembling both the carcass plies and the corresponding annular inserts on the toroidal support, it is possible to simplify the manufacturing processes while increasing the productive capacity of the manufacturing plants.

Therefore the present invention provides a tyre producing process which allows to achieve a minimum number of transferring steps so as to increase the productive capacity of the tyre manufacturing plant without decreasing the quality of the final tyre.

Alternatively the present invention provides an apparatus and a tyre building line which allow to achieve the minimum transferring operations of the toroidal support and a better management of the tyre being processed thereon, with a consequent increase of the productive capacity.

The Applicant has found that both the hereinabove objects are achieved by decreasing the number of transferring steps of the toroidal support in the tyre building process of a tyre manufacturing plant through the use of an apparatus adapted for assembling both the annular inserts and the carcass plies on the toroidal support. In this way, it is possible to simplify the manufacturing process and to increase the productive capacity, by means of a well-managed handling of the toroidal support.

According to a first aspect, the invention relates to a process for producing tyres, said tyres having a carcass structure comprising at least two carcass plies, each carcass ply being associated with at least a pair of annular reinforcing inserts, the process comprising the following steps:
i) transferring a first toroidal support to a first assembling apparatus;
ii) in the first assembling apparatus, sequentially building on the first toroidal support a first toroidal carcass ply and a first pair of annular reinforcing inserts so as to associate each annular reinforcing insert to a respective radially internal edge of the first toroidal carcass ply;
iii) transferring the first toroidal support to a second assembling apparatus;
iv) in the second assembling apparatus, sequentially building on the first toroidal support, carrying the first toroidal carcass ply associated with the first pair of annular reinforcing inserts, a second toroidal carcass ply and a second pair of annular reinforcing inserts so as to associate each annular reinforcing insert to a respective radially internal edge of the second toroidal carcass ply;
v) transferring a second toroidal support to the first assembling apparatus to build thereon a respective first toroidal carcass ply associated to a respective first pair of annular reinforcing inserts;
vi) completing the building of the tyre on said first toroidal support;
vii) repeating the steps iv) and vi) on said second toroidal support;
viii) moulding and vulcanizing the built tyres;
wherein the step v) of transferring the second toroidal support to the first assembling apparatus is carried out when the first toroidal support is processed in the second assembling apparatus during the step iv).

Preferably the process of the invention further comprises, between step ii) and step iv), the step of applying a first filler material on the first toroidal support carrying the first toroidal carcass ply associated with the first pair of annular reinforcing inserts.

Step vi) of completing the building of the tyre may comprises applying a second filler material on the first toroidal support carrying the second toroidal carcass ply associated with the second pair of annular reinforcing inserts.

According to another aspect the invention relates to a tyre building line including at least one working station for assembling a carcass structure, said working station comprising:
- at least two assembling apparatuses of said carcass structure, each assembling apparatus including:
   - at least one strip laying device adapted to lay a plurality of strip-like elements on side and crown portions of a toroidal support in order to form a carcass ply;
   - at least one annular reinforcing insert laying device adapted to lay a plurality of coils of a first elongated element on at least one radially inner side of the toroidal support in order to form an annular reinforcing insert;
   - at least one transferring device to carry out at least one transferring step of the toroidal support selected from:
      (i) a transferring step from the building line into the working station;
      (ii) a transferring step inside the working station; and
      (iii) a transferring step from the working station to the building line.

Advantageously said working station comprises two transferring devices. In this way the functions to be performed are divided between a first and a second transferring device which are, therefore more dynamic, rapid and allow a better handling of the toroidal support.

Preferably said working station comprises one or more filler applying devices adapted to lay a plurality of coils of a second elongated element on at least one radially inner side of the toroidal support in order to form a filling insert structure.

According to a further aspect the invention relates to an assembling apparatus for assembling at least a portion of a carcass structure, comprising:
- at least one strip laying device adapted to lay a plurality of strip-like elements on side and crown portions of a toroidal support in order to form a carcass ply;
- at least one annular reinforcing insert laying device adapted to lay a plurality of coils of a first elongated element on at least one radially inner side of the toroidal support in order to form an annular reinforcing insert;
- at least one positioning device adapted to operatively position the toroidal support alternately at the strip laying device and at the annular reinforcing insert laying device,
wherein said at least one strip laying device (4), said at least one annular reinforcing insert laying device (5) and said at least one positioning device (6) are integrated in the same assembling apparatus (3,3').

Advantageously said positioning device comprises a sliding element.

Preferably said assembling apparatus comprises at least one cutting device adapted for cutting said strip-like elements.

### Brief description of the figures

Further characteristics and advantages of the invention will be more apparent from the following description of one preferred embodiment of the tyre producing process, building line and assembling apparatus according to the invention, provided as a nonlimiting example, with reference to the appended drawings wherein:
- figure 1 shows a schematic lay-out of a tyre manufacturing plant wherein the process according to the invention is carried out
- figure 2 shows a partial plan view of a tyre building line according to one preferred embodiment of the invention;
- figure 3 shows a front view of an assembling apparatus belonging to a working station of the tyre building line according to one preferred embodiment of the invention; and
- figure 4 shows the A-A cross sectional view of figure 2.

### Detailed description of the preferred embodiments

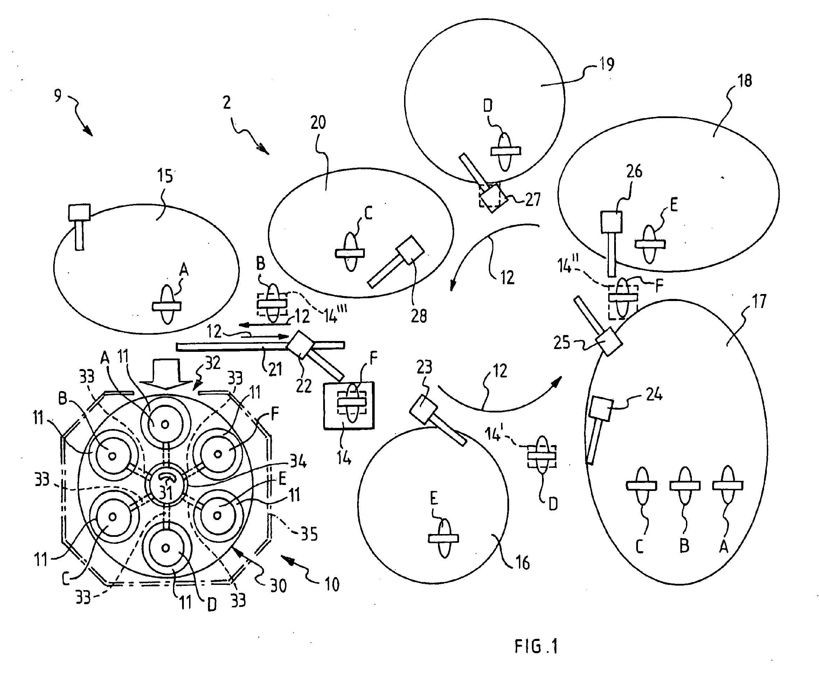

With reference to figure 1 by reference numeral 9 has been generally identified a tyre manufacturing plant wherein the process for producing tyres according to the present invention is carried out.

The tyre manufacturing plant 9 essentially comprises a building line 2 on which each tyre being processed is manufactured by assembling structural components of said tyre in a pre-established sequence, and a vulcanizing line 10 on which each tyre from the building line 2 is moulded and vulcanized within a respective mould 11.

In the tyre building line 2 the different components of the tyre are made and/or assembled to form a green tyre with multiple carcass plies and corresponding multiple annular inserts.

Said building line 2 essentially comprises a plurality of working stations 15, 16, 17, 18, 19, 20 disposed after each other along a manufacturing path, preferably in the form of a closed loop and represented, just as an indication, by arrows 12 in the drawing.

The working stations 15, 16, 17, 18, 19, 20 lend themselves to operate simultaneously, each on at least one tyre being processed for assembling at least one of its structural components thereon.

In more detail, during the assembling steps, the different structural components employed in making each tyre A, B, C, D, E, F are conveniently engaged on a support member, preferably consisting of a toroidal support the shape of which substantially matches the inner conformation of the tyre to be obtained. This toroidal support is preferably of the collapsible type or it is adapted to be divided into a plurality of sectors, so that it can be easily removed from the tyre when processing is over.

Transport devices 22, 23, 24, 25, 26, 27, 28 operate on the building line 2 to sequentially transfer each of the tyres being processed A, B, C, D, E, F from one working station 15, 16, 17, 18, 19, 20, to the next working station, so as to cause sequential assembling of all tyre components, said tyre being then transferred to the vulcanizing line 10.

Preferably, these transport devices 22, 23, 24, 25, 26, 27, 28 comprise one or more robotized arms each of which is associated with at least one of the working stations 15, 16, 17, 18, 19, 20 and is adapted to operate on the individual toroidal supports A, B, C, D, E, F to carry out sequential transfer of each tyre being processed.

More particularly, in the embodiment shown, a first robotized arm 22 is provided which is possibly movable along a guide structure 21 and operates between the building line 2 and vulcanizing line 10, to pick up a finished tyre from the latter and transfer it to a first working station 15, where the tyre is removed from the respective toroidal support A through disassembling of said support. In the first working station 15, the toroidal support A is subsequently reassembled to be then transferred, still by the first robotized arm 22, to a first stand-by station 14 from which it will be picked up for subsequent use in the manufacture of a new tyre.

A second robotized arm 23 lends itself to carry out transfer of the toroidal support F from the first stand-by station 14 to a second working station 16 where assembling of the first components for tyre construction is carried out. The assembling operation may, for example, involve coating of the outer surface of the toroidal support E with a thin layer of elastomer material impervious to air, usually called "liner", as well as application of optional elastomer bands close to the regions corresponding to the tyre beads, and/or formation of an additional coating layer of elastomer material, placed on top of the liner.

Preferably each of the working stations 15, 16, 17, 18, 19, 20 is provided with one or more feeding devices adapted to supply the required base element for accomplishment of the corresponding structural component and operating in combination with application devices for applying the base element and/or the obtained structural component to the tyre being processed.

When assembling of the components in the second working station 16 has been completed, the second robotized arm 23 lays down the toroidal support with the respective tyre which is being manufactured in a second stand-by station 14' that in the figure is occupied by toroidal support D, previously processed in the second station 16 itself.

A third robotized arm 24 picks up the toroidal support D from the second stand-by station 14' to transfer it to a third working station 17.

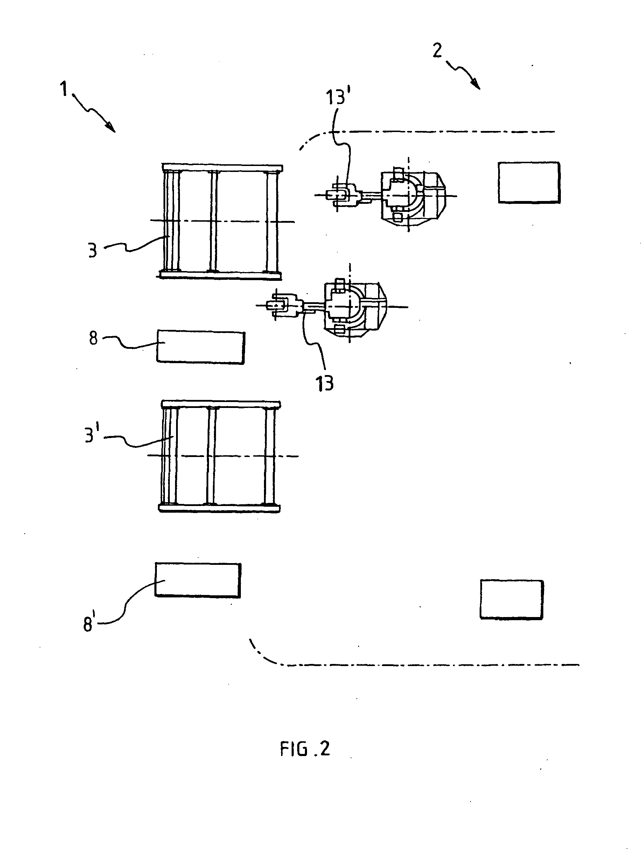

According to a preferred embodiment, said third working station 17, comprises a working station 1, shown in more detail in figure 2, adapted for assembling a carcass structure of a tyre, i.e. a structure comprising at least one carcass ply and one annular insert.

According to the present embodiment, the building line 2 includes one working station 1, however two or more working stations 1 may be provided in a building line 2 of a tyre manufacturing plant 9.

Each working station 1 comprises two or more assembling apparatuses 3, 3', adapted for assembling at least a portion of the carcass structures of the tyres to be manufactured, and a first transferring device 13, adapted for transferring the toroidal support whereon the tyre is being built.

In particular, said first transferring device 13 is adapted to perform three main functions:
- to move the toroidal support from the building line 2 into the working station 1 before the carcass building process is started;
- to move the toroidal support inside the working station 1 from one assembling apparatus 3, 3' to the other; and
- to move the toroidal support from the working station 1 to the building line 2 where the building process is completed.

Optionally, each working station 1 of the tyre building line 2 comprises a second transferring device 13' adapted to cooperate with the first transferring device 13.

Preferably the first transferring device 13 comprises a robotized arm. More preferably also said second transferring device 13' comprises a robotized arm.

According to a variation of the invention, the working station 1 may comprise a third transferring device adapted to move the toroidal support from the working station 1 to the building line 2. Preferably said third transferring device comprises a robotized arm.

The working station 1 comprises at least one filler applying device 8, 8' adapted to lay a plurality of coils of a second elongated element on at least one radially inner side of the toroidal support in order to form a filling insert structure.

Advantageously the working station 1 comprises two filler applying devices 8, 8', as shown in fig. 1. In this preferred embodiment, each of said two filler applying devices 8, 8' is placed downstream a relevant assembling apparatus 3, 3'.

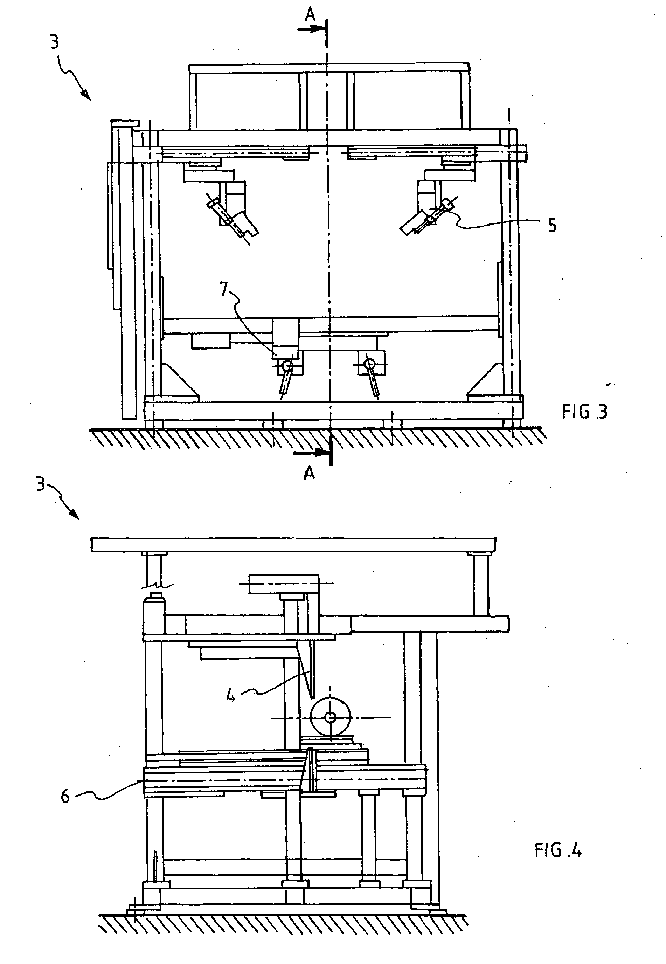

With reference to figures 3 and 4, it is shown that the assembling apparatus 3, 3' of the present embodiment of the invention comprises:
- one strip laying device 4 adapted to form a carcass ply by laying a plurality of strip-like elements on side and crown portions of a toroidal support;
- one annular reinforcing insert laying device 5 adapted to form an annular reinforcing insert by laying a plurality of coils of a first elongated element on at least one radially inner side of the toroidal support; and
- one positioning device 6 adapted to position the toroidal support at one or the other of the strip laying device 4 and the annular reinforcing insert laying device 5.

Optionally the assembling apparatus 3, 3' may comprise two or more strip laying devices 4, two or more annular reinforcing insert laying devices 5 and/or two or more positioning devices 6.

According to one embodiment of the present invention, the positioning device 6 of the assembling apparatus 3, 3' comprises a sliding element which slides on suitable guides moving accordingly the toroidal support in different positions between the strip laying device 4 and the annular reinforcing insert laying device 5.

The assembling apparatus 3, 3' of the preferred embodiment of the invention further comprises one or more cutting devices 7 adapted for suitably cutting said strip-like elements and comprising an upper cutting device and a lower cutting device.

When accomplishment of the carcass structure has been completed in the working station 1, that in the present embodiment belongs to the third working station 17, the fourth robotized arm 25 lays down the toroidal support on a third stand-by station 14" that in the figure is engaged by toroidal support F.

A fifth robotized arm 26 picks up the toroidal support F from the third stand-by station 14" to carry it to a fourth working station 18 that in the example shown is occupied by toroidal support E. In the fourth working station 18 manufacture and assembling of the structural components adapted to define the so-called belt structure of the tyre are carried out.

Further details on a possible modality for manufacture of the belt structure are described in WO 01/38077 in the name of the same Applicant.

When manufacture of the belt structure has been completed, the fifth robotized arm 26 transfers the tyre being processed to a fifth working station 19 that in the example shown is occupied by toroidal support D. In the fifth working station 19 the toroidal support D is engaged by a sixth robotized arm 27 with the aid of which application of a tread band is carried out, said tread band being obtained by winding up an elastomer ribbon-like element in coils disposed consecutively in side by side relationship and superposed until achievement of a tread band of the desired conformation and thickness.

The tyre is subsequently transferred to a sixth working station 20, occupied in this example by toroidal support C. In the sixth working station 20 the toroidal support C is engaged by a seventh robotized arm 28 causing appropriate handling of same in front of respective working apparatuses to carry out application of abrasion-resistant elements to the regions corresponding to the beads, as well as application of the sidewalls, which can be also obtained by winding up at least one elastomer band to form coils disposed in side by side and/or superposed relationship.

When this operation is over, the seventh robotized arm 28 lays down the manufactured tyre on an end stand-by station 14"', occupied, in this example, by toroidal support B, before transfer of the tyre itself to the vulcanizing line 10.

Said vulcanizing line 10 advantageously comprises at least one series of vulcanization moulds 11 which are mounted on a turntable 30 to be driven in rotation in a step-by-step movement in the direction stated by arrow 31, so as to make the moulds carry out a closed-loop path along the vulcanizing line 10, sequentially carrying them, one after the other, to a loading-unloading station 32 of the tyres being processed.

With reference to the manufacturing plant 9 of figure 1, to the assembling apparatus 3, 3' shown in figures 2-4 and to the working station 1 of the building line 2 shown in figure 2, a preferred way of carrying out a process for producing tyres according to the invention, will be now better disclosed.

After the first tyre components have been assembled in the second working station 16, the process for producing tyres with a carcass structure comprising at least two carcass plies, each associated with at least a pair of annular reinforcing inserts, according to the present invention provides a first step i) of transferring a first toroidal support to a first assembling apparatus 3 of a working station 1 wherein the second step ii) is carried out.

Said second step ii) comprises the sequentially building on the first toroidal support of a first toroidal carcass ply and a first pair of annular reinforcing inserts so as to associate each annular reinforcing insert to a respective radially internal edge of the first toroidal carcass ply.

At this point, the first toroidal support is transferred to a second assembling apparatus 3' (step iii)) wherein subsequent step iv) is carried out: a second toroidal carcass ply and a second pair of annular reinforcing inserts are sequentially built on the first toroidal support, carrying the first toroidal carcass ply associated with the first pair of annular reinforcing inserts, so as to associate each annular reinforcing insert to a respective radially internal edge of the second toroidal carcass ply.

While the first toroidal support is thus processed in the second assembling apparatus 3', i.e. while step iv) is being carried out, a second toroidal support is transferred to the first assembling apparatus 3 (step v)) where a respective first toroidal carcass ply associated to a respective first pair of annular reinforcing inserts is built on said second toroidal support.

In other words two toroidal supports, subjected to different process steps, are processed simultaneously in the same working station 1.

Afterwards the process according to the present invention provides step vi) of completing the building of the tyre on the first toroidal support and then repeating the steps iv) and vi) on said second toroidal support in order to have also the tyre on the second toroidal support completed (step vii)).

Finally, the built tyres are subjected to a moulding and vulcanization step viii) which completes the tyre production process, as described above, in the vulcanizing line 10.

Preferably the steps from i) to vii) are repeated at least once. However the number of repetitions of said steps depends on the productivity needs.

The process, according to a preferred way of carrying out the invention, further comprises, between step ii) and step iv), the step of applying a first filler material on the first toroidal support carrying the first toroidal carcass ply associated with the first pair of annular reinforcing inserts.

Moreover, step vi) of completing the building of the tyre on the first toroidal support, according to one way of carrying out the invention, comprises applying a second filler material on the first toroidal support carrying the second toroidal carcass ply associated with the second pair of annular reinforcing inserts.

In case two filler applying devices 8, 8' are provided, the first filler material may be different from the second filler material. This may be used for example to obtain final tyres with specific performing features.

Optionally at least one of said steps ii) and iv) is carried out by means of a positioning device 6 adapted to position the toroidal support in a position wherein a plurality of strip-like elements on side and crown portions of the toroidal support are laid, and in a position wherein a plurality of annular inserts on at least one radially inner side of the toroidal support are laid.

Preferably at least one of said steps i), iii), v) is carried out by means of a first transferring device 13 adapted to transfer the toroidal support from a building line 2 containing a working station 1 comprising the first assembling apparatus 3 and the second assembling apparatus 3' into said working station 1 and viceversa and to transfer the toroidal support inside the working station 1, as mentioned above.

Alternatively one or more of said steps i), iii), v) are carried out by means of a first transferring device 13 and the remaining steps are carried out by means of a second transferring device 13'. For example step iii) is carried out by means of a first transferring device 13 and steps i) and v) are carried out by means of a second transferring device 13'.

## Claims

1. A process for producing tyres, said tyres having a carcass structure comprising at least two carcass plies, each carcass ply being associated with at least a pair of annular reinforcing inserts, the process comprising the following steps:
i) transferring a first toroidal support to a first assembling apparatus (3);
ii) in the first assembling apparatus (3), sequentially building on the first toroidal support a first toroidal carcass ply and a first pair of annular reinforcing inserts so as to associate each annular reinforcing insert to a respective radially internal edge of the first toroidal carcass ply;
iii) transferring the first toroidal support to a second assembling apparatus (3');
iv) in the second assembling apparatus (3'), sequentially building on the first toroidal support, carrying the first toroidal carcass ply associated with the first pair of annular reinforcing inserts, a second toroidal carcass ply and a second pair of annular reinforcing inserts so as to associate each annular reinforcing insert to a respective radially internal edge of the second toroidal carcass ply;
v) transferring a second toroidal support to the first assembling apparatus (3) to build thereon a respective first toroidal carcass ply associated to a respective first pair of annular reinforcing inserts;
vi) completing the building of the tyre on said first toroidal support;
vii) repeating the steps iv) and vi) on said second toroidal support;
viii) moulding and vulcanizing the built tyres;
wherein the step v) of transferring the second toroidal support to the assembling apparatus (3') is carried out when the first toroidal support is processed in the second assembling apparatus (3') during the step iv).

2. A process according to claim 1, further comprising, between step ii) and step iv), the step of
applying a first filler material on the first toroidal support carrying the first toroidal carcass ply associated with the first pair of annular reinforcing inserts.

3. A process according to anyone of previous claims, wherein step vi) comprises applying a second filler material on the first toroidal support carrying the second toroidal carcass ply associated with the second pair of annular reinforcing inserts.

4. A process according to anyone of previous claims, wherein at least one of said steps ii) and iv) is carried out by means of a positioning device (6) adapted to position the toroidal support in a position wherein a plurality of strip-like elements on side and crown portions of the toroidal support are laid, and in a position wherein a plurality of annular inserts on at least one radially inner side of the toroidal support are laid.

5. A process according to anyone of previous claims, wherein at least one of said steps i), iii), v) is carried out by means of a first transferring device (13) adapted to transfer the toroidal support from a building line (2) containing a working station (1) comprising the first assembling apparatus (3) and the second assembling apparatus (3') into said working station (1) and viceversa and to transfer the toroidal support inside the working station (1).

6. A process according to anyone of previous claims, wherein step iii) is carried out by means of a first transferring device (13) and steps i) and v) are carried out by means of a second transferring device (13').

7. A process according to claim 3, wherein the first filler material is different from the second filler material.

8. A tyre building line (2) including at least one working station (1) for assembling a carcass structure, said working station (1) comprising:
- at least two assembling apparatuses (3, 3') of said carcass structure, each assembling apparatus (3, 3') including:
- at least one strip laying device (4) adapted to lay a plurality of strip-like elements on side and crown portions of a toroidal support in order to form a carcass ply;
- at least one annular reinforcing insert laying device (5) adapted to lay a plurality of coils of a first elongated element on at least one radially inner side of the toroidal support in order to form an annular reinforcing insert;
- at least one transferring device (13, 13') to carry out at least one transferring step of the toroidal support selected from:
(i) a transferring step from the building line (2) into the working station (1);
(ii) a transferring step inside the working station (1); and
(iii) a transferring step from the working station (1) to the building line (2).

9. A tyre building line (2) according to claim 8, wherein each of said assembling apparatuses (3, 3') comprises at least one positioning device (6) adapted to position the toroidal support at one or the other of the strip laying device (4) and the annular reinforcing insert laying device (5).

10. A tyre building line (2) according to claim 8 or 9, wherein said working station (1) comprises two transferring devices (13,13') adapted to cooperate with each other.

11. A tyre building line (2) according to one of claims 8-10, wherein a first transferring device (13) comprises a robotized arm.

12. A tyre building line (2) according to claim 10, wherein a second transferring device (13') comprises a robotized arm.

13. A tyre building line (2) according to one of claims 8-12, wherein said working station (1) comprises at least one filler applying device (8, 8') adapted to lay a plurality of coils of a second elongated element on at least one radially inner side of the toroidal support in order to form a filling insert structure.

14. A tyre building line (2) according to claim 13, wherein said working station (1) comprises two filler applying devices (8, 8').

15. An assembling apparatus (3, 3') for assembling at least a portion of a carcass structure, comprising:
- at least one strip laying device (4) adapted to lay a plurality of strip-like elements on side and crown portions of a toroidal support in order to form a carcass ply;
- at least one annular reinforcing insert laying device (5) adapted to lay a plurality of coils of a first elongated element on at least one radially inner side of the toroidal support in order to form an annular reinforcing insert;
- at least one positioning device (6) adapted to operatively position the toroidal support alternately at the strip laying device (4) and at the annular reinforcing insert laying device (5),
wherein said at least one strip laying device (4), said at least one annular reinforcing insert laying device (5) and said at least one positioning device (6) are integrated in the same assembling apparatus (3, 3').

16. An assembling apparatus (3, 3') according to claim 15, wherein the positioning device (6) comprises a sliding element.

17. An assembling apparatus (3, 3') according to claim 15 or 16, further comprising at least one cutting device (7) adapted for cutting said strip-like elements.

18. An assembling apparatus (3, 3') according to claim 17, wherein said cutting device (7) comprises an upper cutting device and a lower cutting device.

19. A tyre manufacturing plant (9) comprising a tyre building line (2) according to one of claims from 8 to 14 and a vulcanizing line (10).

## Patentansprüche

1. Verfahren zur Herstellung von Reifen, wobei die Reifen eine Karkassenstruktur aufweisen, die wenigstens zwei Karkassenlagen umfasst, wobei jede Karkassenlage mit wenigstens einem Paar von ringförmigen Verstärkungseinlagen assoziiert ist, wobei das Verfahren die folgenden Schritte umfasst:
i) Übertragen eines ersten toroidförmigen Trägers an eine erste Montagevorrichtung (3);
ii) In der ersten Montagevorrichtung (3), sequentielles Herstellen einer ersten toroidförmigen Karkassenlage und eines ersten Paars von ringförmigen Verstärkungseinlagen auf dem ersten toroidförmigen Träger, so dass jede ringförmige Verstärkungseinlage mit einer entsprechenden radialen Innenkante der ersten toroidförmigen Karkassenlage assoziiert ist;
iii) Übertragen des ersten toroidförmigen Trägers an eine zweite Montagevorrichtung (3');
iv) in der zweiten Montagevorrichtung (3'), sequentielles Herstellen auf dem ersten toroidförmigen Träger, der die erste toroidförmige Karkassenlage trägt, welche mit dem ersten Paar von ringförmigen Verstärkungseinlagen assoziiert ist, einer zweiten toroidförmigen Karkassenlage und eines zweiten Paars von ringförmigen Verstärkungseinlagen, so dass jede ringförmige Verstärkungseinlage mit einer entsprechenden radialen Innenkante der zweiten toroidförmigen Karkassenlage assoziiert ist;
v) Übertragen eines zweiten toroidförmigen Trägers an die erste Montagevorrichtung (3), um eine entsprechende erste toroidförmige Karkassenlage darauf aufzubauen, welche mit einem entsprechenden ersten Paar von ringförmigen Verstärkungseinlagen assoziiert ist;
vi) Abschließen des Herstellens des Reifens auf dem ersten toroidförmigen Träger;
vii) Wiederholen der Schritte iv) und vi) auf dem zweiten toroidförmigen Träger;
viii) Ausformen und Vulkanisieren der hergestellten Reifen;
wobei der Schritt v) des Übertragens des zweiten toroidförmigen Trägers zur Montagevorrichtung (3') ausgeführt wird, wenn der erste toroidförmige Träger in der zweiten Montagevorrichtung (3') während des Schritts iv) bearbeitet wird.

2. Verfahren nach Anspruch 1, das zwischen Schritt ii) und Schritt iv) ferner den Schritt des Aufbringens eines ersten Füllmaterials auf den ersten toroidförmigen Träger umfasst, der die erste toroidförmige Karkassenlage trägt, welche mit dem ersten Paar von ringförmigen Verstärkungseinlagen assoziiert ist.

3. Verfahren nach einem der vorhergehenden Ansprüche, bei dem der Schritt vi) das Aufbringen eines zweiten Füllmaterials auf den ersten toroidförmigen Träger umfasst, der die zweite toroidförmige Karkassenlage trägt, welche mit dem zweiten Paar von ringförmigen Verstärkungseinlagen assoziiert ist.

4. Verfahren nach einem der vorhergehenden Ansprüche, bei dem der Schritt ii) und/oder iv) mittels einer Positionierungseinrichtung (6) ausgeführt wird, welche ausgelegt ist, um den toroidförmigen Träger in eine Position zu bringen, wo eine Mehrzahl von streifenförmigen Elementen an Seiten- und Kronenabschnitten des toroidförmigen Trägers aufgebracht werden, und in eine Position, wo eine Mehrzahl von ringförmigen Einlagen auf wenigstens eine radiale Innenseite des toroidförmigen Trägers aufgebracht wird.

5. Verfahren nach einem der vorhergehenden Ansprüche, bei dem wenigstens einer der Schritte i), iii), v) mittels einer ersten Übertragungseinrichtung (13) ausgeführt wird, die ausgelegt ist, um den toroidförmigen Träger von einer Montagelinie (2), welche eine Arbeitstation (1) enthält, welche die erste Montagevorrichtung (3) und die zweite Montagevorrichtung (3') umfasst, in die Arbeitsstation (1) und umgekehrt zu übertragen und um den toroidförmigen Träger in der Arbeitsstation (1) zu übertragen.

6. Verfahren nach einem der vorhergehenden Ansprüche, bei dem der Schritt iii) mittels einer ersten Übertragungseinrichtung (13) ausgeführt wird und die Schritte i) und v) mittels einer zweiten Übertragungseinrichtung (13') ausgeführt werden.

7. Verfahren nach Anspruch 3, bei dem das erste Füllmaterial sich von dem zweiten Füllmaterial unterscheidet.

8. Reifenmontagelinie (2), welche wenigstens eine Arbeitsstation (1) zur Montage einer Karkassenstruktur enthält, wobei die Arbeitsstation (1) umfasst:
wenigstens zwei Montagevorrichtungen (3, 3') der Karkassenstruktur, wobei jede Montagevorrichtung (3, 3') enthält:
wenigstens eine Streifenschichtungseinrichtung (4), die ausgelegt ist, um eine Mehrzahl von streifenförmigen Elementen auf Seiten- und Kronenabschnitten eines toroidförmigen Trägers aufzubringen, um eine Karkassenlage auszubilden;
wenigstens eine Schichtungseinrichtung der ringförmigen Verstärkungseinlage (5), welche ausgelegt ist, um eine Mehrzahl von Wicklungen eines ersten länglichen Elements auf wenigstens eine radiale Innenseite des toroidförmigen Trägers aufzubringen, um eine ringförmige Verstärkungseinlage auszubilden;
wenigstens eine Übertragungseinrichtung (13, 13') zum Ausführen wenigstens eines Übertragungsschritts des toroidförmigen Trägers, ausgewählt aus:
(i) einem Übertragungssahritt von der Montagelinie (2) in die Arbeitsstation (1);
(ii) einem Übertragungsschritt in der Arbeitstation (1);
(iii) einem Übertragungsschritt von der Arbeitsstation (1) zur Montagelinie (2).

9. Reifenmontagelinie (2) nach Anspruch 8, bei der jede der Montagevorrichtungen (3, 3') wenigstens eine Positionierungseinrichtung (6) umfasst, die ausgelegt ist, um den toroidförmigen Träger an der Streifenschichtungseinrichtung (4) oder der Schichtungseinrichtung der ringförmigen Verstärkungseinlage (5) zu positionieren.

10. Reifenmontagelinie (2) nach Anspruch 8 oder 9, bei der die Arbeitstation (1) zwei Übertragungseinrichtungen (13, 13') umfasst, die ausgelegt sind, um zusammenzuwirken.

11. Reifenmontagelinie (2) nach einem der Ansprüche 8 bis 10, bei der eine erste Übertragungseinrichtung (13) einen Roboterarm umfasst.

12. Reifenmontagelinie (2) nach Anspruch 10, bei der eine zweite Übertragungseinrichtung (13') einen Roboterarm umfasst.

13. Reifenmontagelinie (2) nach einem der Ansprüche 8 bis 12, bei der die Arbeitstation (1) wenigstens eine Fülleraufbringeinrichtung (8, 8') umfasst, die ausgelegt ist, um eine Mehrzahl von Wicklungen aus einem zweiten länglichen Element auf wenigstens eine radiale Innenseite des toroidförmigen Trägers aufzubringen, um eine füllende Einlagenstruktur auszubilden.

14. Reifenmontagelinie (2) nach Anspruch 13, bei der die Arbeitstation (1) zwei Fülleraufbringeinrichtungen (8, 8') umfasst.

15. Montagelinie (3, 3') zur Montage wenigstens eines Abschnitts einer Karkassenstruktur, umfassend:
wenigstens eine Streifenschichtungseinrichtung (4), die ausgelegt ist, um eine Mehrzahl von streifenförmigen Elementen auf Seiten- und Kronenabschnitte eines toroidförmigen Trägers aufzubringen, um eine Karkassenlage auszubilden;
wenigstens eine Schichtungseinrichtung der ringförmigen Verstärkungseinlage (5) die ausgelegt ist, um eine Mehrzahl von Wicklungen eines ersten länglichen Elements auf wenigstens eine radiale Innenseite des toroidförmigen Trägers aufzubringen, um eine ringförmige Verstärkungseinlage auszubilden;
wenigstens eine Positionierungseinrichtung (6), die ausgelegt ist, um den toroidförmigen Träger abwechselnd an der Streifenschichtungseinrichtung (4) und der Schichtungseinrichtung der ringförmigen Verstärkungseinlagen (5) zu positionieren,
wobei die wenigstens eine Streifenschichtungseinrichtung (4), die wenigstens eine Schichtungseinrichtung der ringförmigen Verstärkungseinlage (5) und die wenigstens eine Positionierungseinrichtung (6) in derselben Montagevorrichtung (3, 3') integriert sind.

16. Montagevorrichtung (3, 3') nach Anspruch 15, bei der die Positionierungseinrichtung (6) ein Gleitelement umfasst.

17. Montagevorrichtung (3, 3') nach Anspruch 15 oder 16, die ferner wenigstens eine Schneideinrichtung (7) umfasst, die ausgelegt ist, um die streifenförmigen Elemente zu schneiden.

18. Montagevorrichtung (3, 3') nach Anspruch 17, bei der die Schneideinrichtung (7) eine obere Schneideinrichtung und eine untere Schneideinrichtung umfasst.

19. Reifenherstellungsanlage (9), welche eine Reifenmontagelinie (2) nach einem der Ansprüche 8 bis 14 und eine Vulkanisierungslinie (10) umfasst.

## Revendications

1. Procédé pour produire des pneumatiques, lesdits pneumatiques ayant une structure de carcasse comprenant au moins deux nappes de carcasse, chaque nappe de carcasse étant associée avec au moins une paire d'inserts de renfort annulaires, le procédé comprenant les étapes suivants:
i) transférer un premier support toroïdal à un premier appareil d'assemblage, et
ii) dans le premier appareil d'assemblage (3), construire séquentiellement sur le premier support toroïdal une première nappe de carcasse d'inserts de renforts annulaires de manière à associer chaque insert de renfort annulaire à un bord interne radialement respectif de la première nappe de carcasse toroïdale, et
iii) transférer le premier support toroïdal à un second appareil d'assemblage (3'), et
iv) dans le second appareil d'assemblage (3'), construire séquentiellement sur le premier support toroïdal, portant la première nappe de carcasse toroïdale associée avec la première paire d'inserts de renfort annulaires, une second nappe de carcasse toroïdale et une second paire d'inserts de renfort annulaires de manière à associer chaque insert de renfort annulaire à un bord interne radialement respectif de la second nappe de carcasse toroïdale, et
v) transférer un second support toroïdale au premier appareil d'assemblage (3) pour construire dessus une première nappe de carcasse toroïdale relative associée à une première paire d'inserts de renfort annulaires, et
vi) achever la construction du pneumatique sur ledit premier support toroïdal, et
vii) répéter les étapes iv) et vi) sur ledit second support toroïdal, et
viii) mouler et vulcaniser les pneumatiques construits, et
dans lequel l'étape v) de transfert du second support toroïdal à l'appareil d'assemblage (3') est effectuée quand le premier support toroïdal est traité dans le second appareil d'assemblage (3') pendant l'étape iv).

2. Procédé selon la revendication 1, comprenant en outre, entre les étapes ii) et iv), l'étape de:
appliquer un premier matériau de remplissage sur le premier support toroïdal portant la première nappe de carcasse toroïdale associée avec la première paire d'inserts de renfort annulaires.

3. Procédé selon l'une quelconque des revendications précédentes, dans lequel l'étape vi) comprend l'application d'un second matériau de remplissage sur le premier support toroïdal portant la seconde nappe de carcasse toroïdale associée avec la seconde paire d'inserts de renfort annulaires.

4. Procédé selon l'une quelconque des revendications précédentes, dans lequel au moins l'une des dites étapes ii) et iv) est effectuée au moyen d'un dispositif de positionnement (6) adapté pour positionner le support toroïdal dans une position dans laquelle une pluralité d'éléments en forme de bande sont disposés sur le coté et les portions de couronne du support toroïdal, et dans une position dans laquelle sont déposés une pluralité d'Inserts annulaires sur au moins un coté interne radialement du support toroïdal.

5. Procédé selon l'une quelconque des revendications précédentes, dans lequel au moins l'une des dites étapes i), iii), v) est effectuée au moyen d'un premier dispositif de transfert (13) adapté pour transférer le support toroïdal d'une ligne de production (2) contenant une station de travail (1) comprenant le premier appareil d'assemblage (3) et le second appareil d'assemblage (3') dans ladite station de travail (1) et réciproquement et pour transférer le support toroïdal à l'intérieur de la station de travail (1).

6. Procédé selon l'une quelconque des revendications précédentes, dans lequel l'étape iii) est effectuée au moyen d'un premier dispositif de transfert (13) et les étapes i) et v) sont effectuées au moyen d'un second dispositif de transfert (13').

7. Procédé selon la revendication 3, dans lequel le premier matériau de remplissage est différent du second matériau de remplissage.

8. Ligne de construction de pneumatique (2) incluant au moins une station de travail (1) pour assembler une structure de carcasse, ladite station de travail (1) comprenant:
- au moins deux appareils d'assemblage (3, 3') de ladite structure de carcasse, chaque appareil d'assemblage (3, 3') incluant:
- au moins un dispositif de pose de bande (4) adapté pour poser une pluralité d'éléments en forme de bande sur le coté et les portions de couronne d'un support toroïdal dans le but de former une nappe de carcasse;
- au moins un dispositif de pose d'insert de renfort annulaire (5) adapté pour poser une pluralité de bobines d'un premier élément étiré sur au moins un coté interne radialement du support toroïdal dans le but de former un insert de renfort annulaire;
- au moins un dispositif de transfert (13, 13') pour effectuer au moins une étape de tranfert du support toroïdal, choisie parmi:
(I) une étape de transfert depuis la ligne de construction (2) dans la station de travail (1);
(II) une étape de transfert dans la station de travail (1); et
(iii) une étape de transfert depuis la station de travail (1) vers la ligne de construction (2).

9. Ligne de construction de pneumatique (2) selon la revendication 8, dans laquelle chacun des appareils d'assemblages (3, 3') comprend au moins un dispositif de positionnement (6) adapté pour positionner le support toroïdal sur l'un ou l'autre du dispositif de pose de bande (4) et du dispositif de pose d'insert de renfort annulaire (5).

10. Ligne de construction de pneumatique (2) selon les revendications 8 ou 9, dans laquelle ladite station de travail (1) comprends deux dispositifs de transfert (13, 13') adaptés pour coopérer l'un avec l'autre.

11. Ligne de construction de pneumatique (2) selon les revendications 8 à 10, dans laquelle un premier dispositif de transfert (13) comprend un bras robotisé.

12. Ligne de construction de pneumatique (2) selon la revendication 10, pour laquelle un second dispositif de transfert (13') comprend un bras robotisé.

13. Ligne de construction de pneumatique (2) selon les revendications 8 à 12, dans laquelle ladite station de travail (1) comprend au moins un dispositif d'application de remplissage (8, 8') adapté pour disposer une pluralité de bobines d'un second élément allongé sur au moins un coté interne radialement du support toroïdal dans le but de former une structure d'insert de remplissage.

14. Ligne de construction de pneumatique (2) selon la revendication 13, dans laquelle ladite station de travail (1) comprend deux dispositifs d'application de remplissage (8, 8').

15. Appareil d'assemblage (3, 3') pour assembler au moins une portion d'une structure de carcasse, comprenant:
- au moins un dispositif de disposition de bande (4) adapté pour déposer une pluralité d'éléments en forme de bande sur le coté et des portions de couronne d'un support toroïdal dans le but de former une nappe de carcasse;
- au moins un dispositif de disposition d'insert de renfort annulaire (5) adapté pour déposer une pluralité d'bobines d'un premier élément allongé sur au moins un coté interne radial du support toroïdal dans le but de former un insert de renfort annulaire;
- au moins un dispositif de positionnement (6) adapté pour positionner fonctionnellement le support toroïdal alternativement sur le dispositif de disposition annulaire (4) et sur le dispositif de disposition d'insert de renfort annulaire,
dans lequel ledit au moins un dispositif de disposition de bande (4), ledit au moins dispositif d'insert de renfort annulaire (5) et ledit au moins au moins un dispositif de positionnement (6) sont intégrés dans le même appareil d'assemblage (3, 3').

16. Appareil d'assemblage (3, 3') selon la revendication 15, dans lequel le dispositif de positionnement (6) comprends un élément coulissant.

17. Appareil d'assemblage (3, 3') selon les revendications 15 ou 16, comprenant en outre au moins un dispositif de découpe (7) adapté pour découper lesdits éléments en forme de bande.

18. Appareil d'assemblage (3, 3') selon la revendication 17, dans lequel ledit dispositif de découpe (7) comprend au moins un dispositif haut de découpe et un dispositif bas de découpe.

19. Usine de fabrication de pneumatique (9) comprenant une ligne de construction de pneumatique (2) selon l'une des revendications 8 à 14 et une ligne de vulcanisation (10).
